# FASCICULE DE BREVET EUROPEEN

(11) **EP 1 432 091 B1**
(45) Date de publication et mention de la délivrance du brevet: **25.07.2007**
(21) Numéro de dépôt: 03293241.0
(22) Date de dépôt: 19.12.2003
(51) Int. Cl.: H02G 3/06

(54) **Accessoire de couplage pour socle de goulotte**
Kupplungsgarnitur für einen Kabelrinnesockel
Coupling element for raceway base

(30) Priorité: 20.12.2002 FR 0216374
(43) Date de publication de la demande: 23.06.2004
(73) Titulaire: PLANET WATTOHM, 60300 Senlis (FR)
(72) Inventeur: Ventura Miret, Jordy, 08859 Begues Barcelona (ES); Fraysse, Nicolas, 60300 Senlis (FR); Bacouelle, Hervé, Hameau de Béthencourt 60140 Bailleval (FR)
(74) Mandataire: Santarelli

(56) Documents cités:
- EP-A- 0 083 809
- EP-A- 0 520 583
- EP-A- 1 049 226
- DE-U- 9 215 059
- FR-A- 2 686 141

## Description

La présente invention concerne de manière générale les goulottes électriques de cheminement de câbles ou de fils électriques.

Ces goulottes électriques comprennent des socles fermés ou non par des couvercles de fermeture.

Les sections de ces socles varient d'un domaine d'utilisation à l'autre.

Par exemple, dans le domaine de l'alimentation électrique domestique, on utilise des petites goulottes appelées moulures dont les socles présentent des petites sections parce que la quantité de câbles électriques qui cheminent dans les socles est relativement faible.

Par contre, dans le domaine industriel, on utilise essentiellement des sections importantes de socles de goulotte.

Les socles présentent généralement une section en U et sont réalisés en tôle ou en matériau synthétique perforé ou non, ou encore en fils soudés ensemble de manière à former une sorte de panier courant dans l'espace suivant un parcours souhaité.

Les tronçons de socle livrés sur les chantiers présentent des grandes longueurs et sont assemblés entre eux par des accessoires de couplage, usuellement dénommés éclisses, destinés à l'assemblage de deux tronçons de socle de goulotte en assurant l'alignement, le jointoiement et la rigidité de l'assemblage des tronçons de socle entre eux.

L'invention concerne plus particulièrement un tel accessoire de couplage comprenant une partie centrale longitudinale destinée à s'adosser sur la face interne de deux ailes latérales longitudinales juxtaposées desdits tronçons de socle mis bout à bout, un rebord de base longitudinal, un rebord de tête longitudinal et des moyens d'encliquetage aptes à s'encliqueter dans au moins un logement interne desdits tronçons de socle.

On connaît déjà du document EP 721 243 un accessoire de couplage tel que précité dont les moyens d'encliquetage sont constitués, d'une part, par le bord libre du rebord de tête et par un décrochement prévu à la jonction entre le rebord de tête et la partie centrale, et d'autre part, par la tranche libre du rebord de base. Le bord libre du rebord de tête est destiné à venir en appui contre la face interne des retours des ailes latérales longitudinales correspondantes des tronçons de socle de goulotte, le décrochement vient en appui contre un épaulement formé sur la face interne des ailes latérales longitudinales desdits tronçons de socle, et la tranche libre du rebord de base vient en appui contre une baguette longitudinale réalisée sur le fond.

Cet agencement de moyens d'encliquetage n'est pas suffisamment efficace pour bloquer l'accessoire de couplage sur les tronçons de socle de goulotte et il est prévu, sur la face extérieure de la partie centrale de l'accessoire de couplage, des ergots de blocage qui assurent une action de blocage supplémentaire entre l'accessoire de couplage et les ailes latérales longitudinales des tronçons de socle de goulotte assemblés. Par ailleurs, l'encliquetage implique à la fois le rebord de base et le rebord de tête.

On connaît également, par le document EP-A-0 520 583, un accessoire de couplage dont le rebord supérieur longitudinal est segmenté en au moins deux segments décalés latéralement, mais il n'y a pas de moyens d'encliquetage puisque les pattes du rebord inférieur sont en simple appui sur le fond des goulottes tandis que le reste de ce rebord inférieur reste à l'écart de ce fond. Il n'y a donc aucun verrouillage en position.

Par rapport à l'état de la technique précité, la présente invention propose un nouvel accessoire de couplage dont la mise en place par encliquetage est rapide et ne nécessite pas de pièce supplémentaire pour assurer le maintien en place de l'accessoire de couplage sur les tronçons de socle de goulotte assemblés.

Plus particulièrement, l'invention propose un accessoire de couplage, tel que défini par le document EP-0 721 243 précité, caractérisé en ce que ledit rebord de tête longitudinal est segmenté en au moins deux segments décalés latéralement l'un par rapport à l'autre dont au moins un porte, sur un bord d'extrémité libre, un bourrelet faisant partie desdits moyens d'encliquetage et apte à s'encliqueter dans une rainure formée sur la face intérieure desdits tronçons de socle de goulotte.

Il y a ainsi un accrochage ou un verrouillage du bourrelet dans la rainure, indépendamment des autres moyens d'encliquetage, et il est possible d'assurer le maintien de l'accessoire par des moyens d'encliquetage uniquement réalisés sur un seul rebord longitudinal de l'accessoire.

D'autres caractéristiques avantageuses et non limitatives de l'accessoire de couplage selon l'invention sont les suivantes :
- chaque segment porte, sur un bord d'extrémité libre, un bourrelet faisant partie desdits moyens d'encliquetage ;
- lesdits segments sont également décalés longitudinalement l'un par rapport à l'autre ;
- le rebord de tête longitudinal est segmenté en au moins trois segments, à savoir un segment central encadré par deux segments d'extrémité situés à chacune des extrémités dudit rebord de tête, lesdits segments étant deux à deux décalés latéralement l'un par rapport à l'autre ;
- chaque extrémité dudit rebord de tête comporte une paire de segments décalés latéralement l'un par rapport à l'autre ;
- le rebord de tête comporte une pluralité de paires de segments, les segments d'une paire étant décalés latéralement l'un par rapport à l'autre ;
- les bourrelets des segments dudit rebord de tête sont deux à deux orientés dans des directions opposées ;
- les segments présentent des hauteurs sensiblement identiques de sorte que les bourrelets qu'ils portent sont situés au même niveau ;
- les segments du rebord de tête présentent des hauteurs différentes de sorte que les bourrelets qu'ils portent sont situés à deux niveaux différents ;
- les segments du rebord de tête présentent des profils sensiblement identiques ;
- les segments du rebord de tête présentent deux profils différents ;
- un premier profil de segment est un profil droit et un second profil de segment est un profil en zigzag ;
- le rebord de base comporte une pluralité d'orifices destinés à être traversés par des organes de fixation aptes à s'ancrer dans lesdits tronçons de socle ;
- lesdits orifices présentent un contour fermé ;
- lesdits orifices présentent un contour ouvert ;
- l'accessoire de couplage comporte, à mi-longueur, une languette de centrage flexible découpée dans le rebord de base et portant en saillie, sur une face externe tournée vers la face intérieure desdits tronçons de socle, un plot de centrage dont la largeur correspond à celle de la languette de centrage et autorisant le centrage de l'accessoire de couplage sur les deux tronçons de socle en se positionnant entre les deux bords d'extrémité coupés de ces derniers lors de l'assemblage desdits tronçons de socle ; et
- il est réalisé d'une seule pièce en matière plastique. L'invention propose également un ensemble comprenant :

- deux tronçons de socle de goulotte aboutés, chaque tronçon de socle comportant un fond à partir duquel s'élèvent deux ailes latérales longitudinales pourvues, à leur extrémité libre, d'un retour, et
- deux accessoires de couplage pour l'assemblage des deux tronçons de socle, un accessoire de couplage par couple d'ailes latérales longitudinales aboutées,
caractérisé en ce que, pour la mise en place des accessoires de couplage selon l'invention, il est prévu au moins une rainure formée sur la face intérieure desdits tronçons de socle.

Des caractéristiques non limitatives et avantageuses de cet ensemble sont par exemple les suivantes :
- ladite rainure est délimitée par la face interne des retours d'ailes latérales longitudinales des tronçons de socle de goulotte ;
- il est prévu une rainure formée sur la face interne de chaque aile latérale longitudinale de chaque tronçon de socle, cette rainure étant délimitée notamment par une nervure longitudinale portée par la face interne de l'aile latérale longitudinale correspondante ;
- il est prévu une rainure formée sur la face intérieure du fond de chaque tronçon de socle, cette rainure étant délimitée par la face intérieure d'une nervure longitudinale portée par ledit fond correspondant ; et
- il est prévu une rainure formée par un décrochement réalisé à la jonction entre chaque aile latérale longitudinale et le fond de chaque tronçon de socle.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un premier mode de réalisation d'un accessoire de couplage selon l'invention ;
- la figure 2 est une vue en bout de l'accessoire de couplage de la figure 1 ;
- les figures 3A, 3B et 3C montrent, vues en bout, les principales étapes de montage de l'accessoire de couplage de la figure 1 sur un tronçon de socle de goulotte pour réaliser un ensemble selon l'invention ;
- la figure 4 est une vue schématique en perspective d'un deuxième mode de réalisation de l'accessoire de couplage selon l'invention ;
- la figure 5 est une vue en bout de l'accessoire de couplage de la figure 4;
- les figures 6A, 6B et 6C montrent, vues en bout, les principales étapes de montage de l'accessoire de couplage de la figure 4 sur un tronçon de socle de goulotte pour réaliser un ensemble selon l'invention ;
- la figure 7 représente une vue schématique en bout d'une partie d'un ensemble selon l'invention comprenant un troisième mode de réalisation d'un accessoire de couplage selon l'invention associé à un tronçon de socle de goulotte ;
- la figure 8 est une vue schématique en bout d'une partie d'une première variante de l'ensemble selon l'invention comprenant un quatrième mode de réalisation d'un accessoire de couplage selon l'invention associé à un autre tronçon de socle de goulotte ;
- la figure 9 est une vue schématique en bout d'une partie d'une deuxième variante de l'ensemble selon l'invention comprenant un cinquième mode de réalisation de l'accessoire de couplage selon l'invention associé à un autre tronçon de socle de goulotte ;
- la figure 10 est une vue schématique en perspective d'un sixième mode de réalisation de l'accessoire de couplage selon l'invention ;
- la figure 11 est une vue en bout de l'accessoire de couplage de la figure 10 ;
- la figure 12 est une vue en bout de l'accessoire de couplage de la figure 10 monté dans un tronçon de socle de goulotte pour former un ensemble selon l'invention ; et
- les figures 13A et 13B sont des vues schématiques en perspective de deux étapes essentielles de montage de l'accessoire de couplage de la figure 10 entre deux tronçons de socle de goulotte à assembler.

En préliminaire, on notera que les éléments identiques ou similaires des différents modes de réalisation représentés sur les différentes figures seront, dans la mesure du possible, référencés par les mêmes signes de référence et ne seront pas décrits à chaque fois.

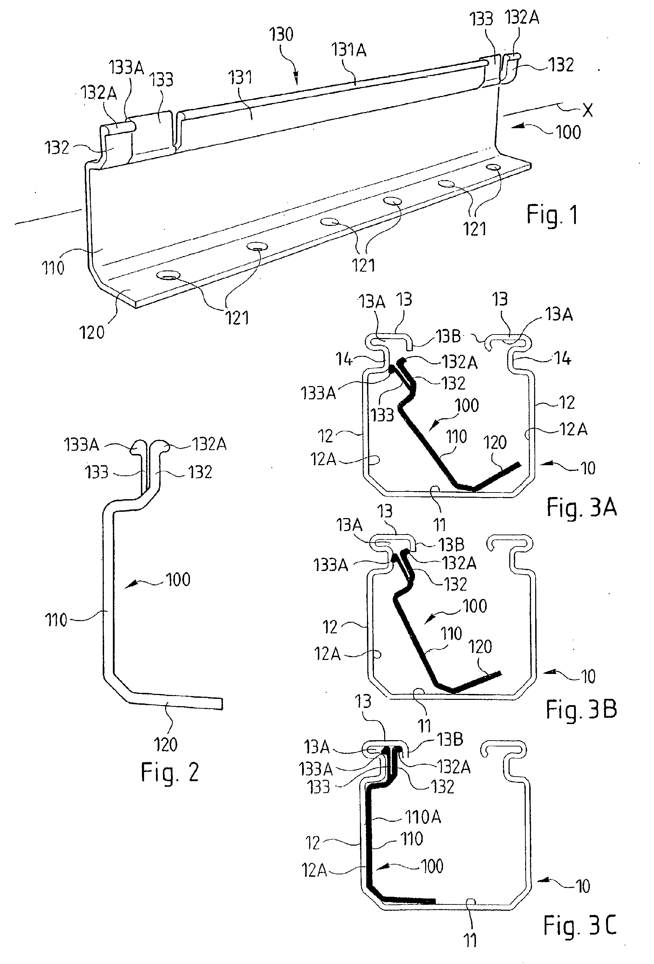

Sur les figures 1 et 2, on a représenté un premier mode de réalisation d'un accessoire de couplage 100 destiné à l'assemblage de deux tronçons de socle 10 de goulotte.

Il est réalisé avantageusement d'une seule pièce en matière plastique.

Bien entendu, il peut être également réalisé en métal.

Cet accessoire de couplage 100 est une pièce allongée selon un axe X qui comprend une partie centrale 110 longitudinale destinée à s'adosser à la face interne 12A de deux ailes latérales longitudinales 12 juxtaposées desdits tronçons de socle 10 de goulotte mis bout à bout (voir figure 3C).

La partie centrale 110 présente un profil sensiblement similaire à celui des ailes latérales longitudinales contre lesquelles elle vient s'adosser, ici un profil globalement en C, de manière à épouser au mieux la forme des ailes latérales longitudinales correspondantes des tronçons de socle 10.

L'accessoire de couplage 100 comporte en outre un rebord de base 120 longitudinal qui longe un des bords longitudinaux de la partie centrale 110. Ce rebord de base 120 s'étend globalement perpendiculairement à la partie centrale 110.

Ce rebord de base 120 est destiné à venir se positionner, ici, contre une partie de la face interne des fonds 11 des tronçons de socle 10 aboutés (voir figure 3C).

L'accessoire de couplage 100 représenté sur les figures 1 et 2 comporte, à l'opposé du rebord de base 120, un rebord de tête 130 longitudinal qui s'étend, ici, globalement dans un plan parallèle à celui de la partie centrale 110. Ce rebord de tête 130, qui court le long d'un autre bord longitudinal de la partie centrale 110, comprend des moyens d'encliquetage aptes à s'encliqueter dans un logement interne desdits tronçons de socle 10 afin de solidariser l'accessoire de couplage 100 aux tronçons de socle 10 à assembler.

Avantageusement, le rebord de tête 130 de l'accessoire de couplage 100, représenté sur les figures 1 et 2, est segmenté en cinq segments 131, 132, 133, à savoir un segment central 131 de grande longueur et, à chaque extrémité dudit rebord de tête 130, deux paires de segments 132, 133. Les segments 131, 132, 133 du rebord de tête 130 de l'accessoire de couplage 100 sont deux à deux décalés latéralement et longitudinalement l'un par rapport à l'autre.

Les segments 131, 132, 133 présentent ici des profils similaires.

Plus particulièrement, chaque paire de segments 132, 133 d'extrémité sont décalés latéralement et longitudinalement l'un par rapport à l'autre en s'étendant ici dans des plans parallèles, et le segment central 131 est décalé par rapport aux deux segments 133 situés à ses deux extrémités. Ce segment central 131 se trouve alors aligné avec les segments 132 situés aux extrémités du rebord de tête 130 de l'accessoire de couplage 100.

Avantageusement, chaque segment 131, 132, 133 du rebord de tête 130 de l'accessoire de couplage 100 comporte, sur son bord d'extrémité libre, un bourrelet 131A, 132A, 133A formant lesdits moyens d'encliquetage et apte à s'encliqueter dans une rainure 13A formée sur la face intérieure des tronçons de socle 10 de goulotte.

Ici, la rainure 13A est formée au dos des retours 13 portés en tête des ailes latérales longitudinales 12 des tronçons de socle 10 de goulotte.

A ce propos, comme le montrent les figures 3A et 3B, il convient de préciser que les tronçons de socle 10 de goulotte assemblés à l'aide de l'accessoire de couplage 100 font partie d'un ensemble selon l'invention comprenant non seulement les deux tronçons de socle 10 de goulotte aboutés mais aussi un accessoire de couplage 100 par couple d'ailes latérales longitudinales 12 aboutées.

Ces tronçons de socle 10 de goulotte comprennent deux ailes latérales longitudinales 12 s'élevant à partir d'un fond 11 et portant chacune en tête un retour 13. Ici, les retours 13 s'étendent l'un vers l'autre, et les faces externes des ailes latérales longitudinales 12 des tronçons de socle 10 comprennent, à proximité de leur retour 13, un renfoncement 14 longitudinal permettant la mise en place d'un couvercle de fermeture recouvrant non représenté.

Ainsi, chaque retour 13 d'aile latérale longitudinale 12 du tronçon de socle 10 correspondant forme intérieurement une rainure 13A dans laquelle viennent s'encliqueter les bourrelets des segments 131, 132, 133 du rebord de tête 130 de l'accessoire de couplage 100, en s'accrochant et se verrouillant, en fin de course, sur l'épaulement formé par le renfoncement 14 sur la face interne de l'aile.

Les segments 131, 132, 133 de l'accessoire de couplage 100 représenté sur les figures 1 et 2 présentent une hauteur sensiblement identique de sorte que les bourrelets 131A, 132A, 133A qu'ils portent sont situés au même niveau et viennent s'encliqueter dans la même rainure 13A formée au dos des retours 13 correspondants des ailes latérales longitudinales 12 des tronçons de socle 10.

Les bourrelets 132A, 133A des paires de segments 132, 133 situés à chaque extrémité du rebord de tête 130 de l'accessoire de couplage s'étendent dans des directions opposées, le bourrelet 131A du segment central 131 s'étendant dans la même direction que celle des bourrelets 132A des segments 132 situés aux extrémités du rebord de tête 130 de l'accessoire de couplage 100.

Selon une caractéristique préférentielle de l'accessoire de couplage 100 représenté sur les figures 1 et 2, le rebord de base 120 comporte une série d'orifices 121 traversants répartis régulièrement sur toute la longueur du rebord de base 120 et destinés à être traversés par des organes de fixation non représentés venant se fixer dans le fond 11 des tronçons de socle 10 de goulotte correspondants pour augmenter, en cas de fortes charges en câbles électriques, la tenue de l'accessoire de couplage 100 sur les tronçons de socle 10 de goulotte assemblés.

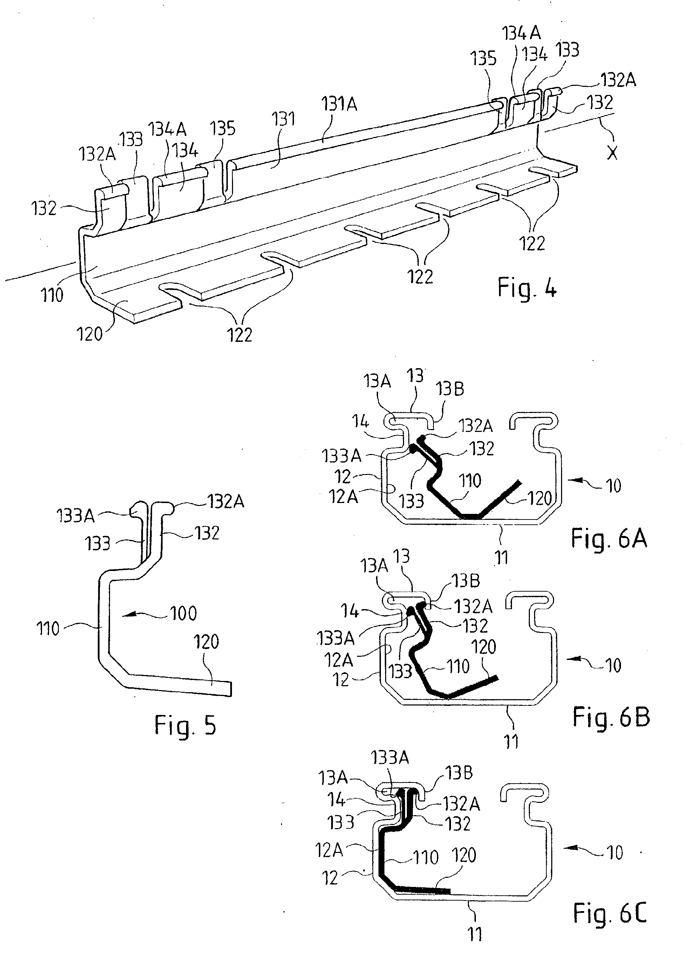

Ici, les orifices 121 sont à contour fermé mais, selon une variante de réalisation représentée plus particulièrement sur la figure 4, on peut prévoir que ces orifices présentent un contour ouvert et une forme oblongue.

En référence aux figures 3A à 3C, nous allons maintenant décrire la mise en place de l'accessoire de couplage 100, représenté sur les figures 1 et 2, sur un tronçon de socle 10 de goulotte pour réaliser un ensemble selon l'invention.

Bien entendu, pour assembler deux tronçons de socle 10 aboutés, il est préférable d'utiliser deux accessoires de couplage 100, un par couple d'ailes latérales longitudinales 12 aboutées.

Comme le montre la figure 3A, la mise en place de l'accessoire de couplage 100 sur chaque tronçon de socle 10 consiste tout d'abord à engager les bourrelets 132A, 131A des segments 132, 131 du rebord de tête 130 dans la rainure 13A formée au dos du retour 13 de l'aile latérale longitudinale 12 correspondante de manière à ce qu'ils viennent s'accrocher derrière le bec 13B dudit retour 13. Puis, l'accessoire de couplage 100 est pivoté autour de ce point d'accrochage des bourrelets 132A, 131A dans la rainure 13A, de façon à adosser la partie centrale 110 contre la face interne 12A desdites ailes latérales longitudinales 12 des tronçons de socle 10.

En bout de course, les bourrelets 133A des segments 133 du rebord de tête 130 de l'accessoire de couplage 100 viennent s'accrocher dans la rainure 13A prévue au-dessus du renfoncement 14 et sous le retour 13 de l'aile latérale longitudinale 12 correspondante du tronçon de socle 10.

Ainsi, les bourrelets 131A, 132A des segments 131, 132 du rebord de tête 130 de l'accessoire de couplage 100 forment un point d'articulation pour la mise en place de l'accessoire de couplage 100 dans le tronçon de socle 10 correspondant, et les bourrelets 133A des segments 133 assurent le verrouillage de l'accessoire de couplage 100 dans le tronçon de socle 10 correspondant.

Une fois mise en place dans le tronçon de socle 10, comme le montre la figure 3C, la partie centrale 110 de l'accessoire de couplage 100 est plaquée contre la face interne 12A de l'aile latérale longitudinale 12 correspondante, et le rebord de base 120 est également sensiblement plaqué contre la face intérieure du fond 11 dudit tronçon de socle 10.

Eventuellement, si le niveau de chargement en câbles électriques des tronçons de socle 10 de goulotte est élevé, l'installateur peut renforcer le maintien par encliquetage de l'accessoire de couplage 100 sur chaque tronçon de socle 10 par la fixation de vis ou d'organes de fixation, au travers des orifices 121 du rebord de base 120, dans le fond 11 de chaque tronçon de socle 10.

Toutefois, pour un chargement en câbles dit normal des tronçons de socle 10, l'encliquetage du rebord de tête 130 dans la rainure 13A des tronçons de socle 10 suffit à maintenir, de façon rigide et solide, l'accessoire de couplage 100 dans les tronçons de socle 10.

Sur les figures 4 et 5, on a représenté un deuxième mode de réalisation de l'accessoire de couplage 100 selon l'invention qui se distingue essentiellement du mode de réalisation représenté sur les figures 1 et 2 par le fait que, d'une part, la partie centrale 110 de cet accessoire de couplage 100 est de plus faible hauteur, et, d'autre part, le rebord de tête 130 est ici segmenté en neuf segments, un segment central 131 de plus grande longueur encadré par deux paires de segments d'extrémité 132, 133, 134, 135 de plus courte longueur.

Les segments 132, 133 ; 134, 135 d'une même paire sont décalés latéralement et longitudinalement l'un par rapport à l'autre, et le segment central 131 est décalé latéralement et longitudinalement par rapport aux deux segments 135 situés à ses deux extrémités, de sorte qu'il est aligné avec les segments 132, 134 de chaque paire d'extrémité.

Les segments 131, 132, 133, 134, 135 présentent ici des profils similaires de sorte qu'ils s'étendent dans des plans parallèles.

Ici, également, chaque segment comporte, sur son bord d'extrémité libre, un bourrelet 131A, 132A, 133A, 134A 135A destiné à l'encliquetage de l'accessoire de couplage 100 dans les rainures 13A formées en dessous des retours 13 des ailes latérales longitudinales aboutées desdits tronçons de socle 10 de goulotte.

Les segments 131, 132, 133, 134, 135 présentent des hauteurs sensiblement identiques, de sorte que tous les bourrelets 131A, 132A, 133A, 134A, 135A sont situés au même niveau. Ils s'étendent alternativement dans des directions opposées tout comme les bourrelets de l'accessoire de couplage 100 représenté sur la figure 1.

Comme cela a déjà été indiqué ci-dessus, le rebord de base 120 de l'accessoire de couplage 100, représenté sur la figure 4, comporte une série d'orifices 122 de forme oblongue à contour ouvert permettant la fixation éventuelle de l'accessoire de couplage 100 par des organes de vissage au fond 11 des tronçons de socle 10 de goulotte correspondants.

Cet accessoire de couplage 100 est également réalisé d'une seule pièce en matière plastique ou en métal.

Les principales étapes de mise en place de cet accessoire de couplage 100 sur un tronçon de socle 10 de goulotte sont représentées sur les figures 6A à 6C. Ces étapes sont identiques à celles représentées sur les figures 3A à 3C.

En effet, pour mettre en place l'accessoire de couplage 100 représenté sur la figure 4 dans le tronçon de socle 10 représenté sur les figures 6A à 6C, on introduit tout d'abord les bourrelets 132A, 134A, 131A dans la rainure 13A formée en dessous du retour 13 de l'aile latérale longitudinale 12 correspondante pour les accrocher derrière le bec 13B, puis on fait pivoter, autour de ce point d'accrochage, l'accessoire de couplage 100 de façon à venir plaquer sa partie centrale 100 contre la face interne 12A de l'aile latérale longitudinale 12 correspondante.

En fin de course, les bourrelets 133A, 135A des segments 133, 135 du rebord de tête 130 viennent s'encliqueter dans la rainure 13A ; ils permettent alors de verrouiller l'accessoire de couplage 100 sur le tronçon de socle 10 correspondant.

Lorsque l'accessoire de couplage 100 est monté dans le tronçon de socle 10, son rebord de base 120 est sensiblement plaqué contre le fond 11 dudit tronçon de socle 10, et la partie centrale 110 longitudinale est adossée à la face interne 12A de l'aile latérale longitudinale 12 correspondante.

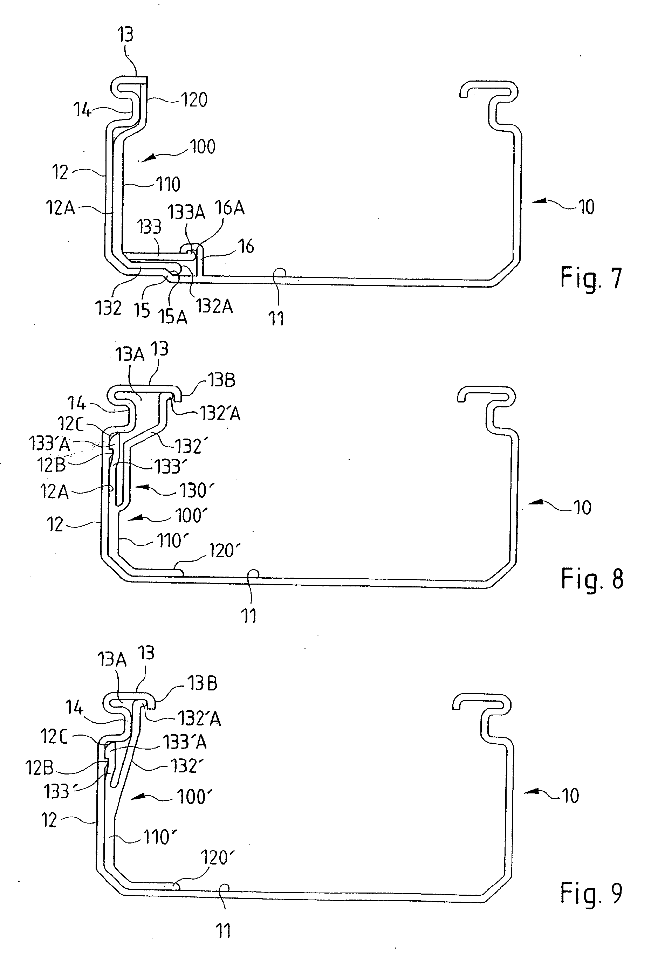

Sur la figure 7, on a représenté un troisième mode de réalisation de l'accessoire de couplage 100 selon l'invention qui est associé à un nouveau tronçon de socle 10 de goulotte pour former avec celui-ci une partie d'un ensemble selon l'invention.

Cet accessoire de couplage 100 est similaire aux accessoires de couplage 100 représentés sur les figures 1 et 4, mis à part le fait que son rebord de base 120 ne s'étend pas sensiblement à angle droit de sa partie centrale 110 mais plutôt dans son prolongement.

D'autre part, les segments 132, 133 des paires de segments du rebord de tête 130 présentent ici des hauteurs différentes de sorte que les bourrelets 132A, 133A qu'ils portent sont situés à des niveaux différents.

Mis à part cela, les segments 132, 133 du rebord de tête 130 présentent un profil identique à ceux des accessoires de couplage 100 représentés sur les figures 1 et 4 avec, alternativement, des bourrelets s'étendant dans des directions opposées.

Comme le montre la figure 7, cet accessoire de couplage 100 est destiné à être monté dans les tronçons de socle 10, tête en bas, par rapport au montage des accessoires de couplage 100 représentés sur les figures 1 à 4 dans les tronçons de socle 10 de goulotte représentés sur les figures 3A et 6A.

A cet effet, le tronçon de socle 10 représenté sur la figure 7 comporte, sur l'aile latérale longitudinale 12 correspondante, un retour 13 de plus courte longueur qui ne comporte pas de bec et qui ne forme pas une rainure comme les retours 13 des tronçons de socle 10 représentés sur les figures 3A et 6A.

Par contre, ce tronçon de socle 10 porte sur son fond 11 une nervure longitudinale 16 qui définit intérieurement une rainure 16A d'encliquetage des bourrelets 133A portés par les segments 133 du rebord de tête 130 de l'accessoire de couplage 100.

En outre, à la jonction entre le fond 11 du tronçon de socle 10 et de l'aile latérale longitudinale 12 correspondante, il est prévu un décrochement 15 qui forme, sur la face intérieure du tronçon de socle 10, une rainure 15A d'accrochage des bourrelets 132A des segments 132 du rebord de tête 130 de l'accessoire de couplage 100.

Pour mettre en place cet accessoire de couplage 10 sur le tronçon de socle 10 représenté sur la figure 7, l'installateur introduit les bourrelets 133A des segments 133 du rebord de tête de l'accessoire de couplage 100 dans la rainure 16A pour l'accrocher sur la nervure longitudinale 16 et former ainsi un point d'articulation autour duquel l'accessoire de couplage est pivoté pour venir l'adosser contre la face interne 12A de l'aile latérale longitudinale 12 correspondante du tronçon de socle 10.

En bout de course, l'accessoire de couplage 100 est verrouillé sur le tronçon de socle 10 lorsque les bourrelets 132A des segments 132 du rebord de tête viennent s'accrocher dans la rainure 15A formée par le décrochement 15 à la jonction entre le fond 11 et l'aile latérale longitudinale 12 correspondante du tronçon de socle 10.

Dans cette position verrouillée, le rebord de base 120 de l'accessoire de couplage 100 est plaqué contre le dos du renfoncement 14 prévu sur la face externe de l'aile latérale longitudinale 12 correspondante pour le montage du couvercle de fermeture. En outre, le bord d'extrémité libre du rebord de base 120 de l'accessoire de couplage 100 vient s'appuyer contre la face intérieure du retour 13 de l'aile latérale longitudinale 12.

Sur les figures 8 et 9, on a représenté deux autres modes de réalisation du même type que l'accessoire de couplage 100' destinés à être montés dans une autre variante de tronçon de socle 10 de goulotte.

Ici, les accessoires de couplage 100' représentés sur ces figures comportent également une partie centrale 110' destinée à venir s'adosser contre la face interne 12A d'une aile latérale longitudinale 12 de chaque tronçon de socle 10, un rebord de base 120' longitudinal qui borde un des bords longitudinaux de la partie centrale 110' et un rebord de tête 130' longitudinal qui borde l'autre bord longitudinal de la partie centrale 110'.

Le rebord de tête 130' des accessoires de couplage 100' représentés sur les figures 8 et 9 est également segmenté en une pluralité de segments, au moins une paire de segments 132', 133' à chaque extrémité encadrant un segment central ici non visible sur les figures, qui sont deux à deux décalés latéralement l'un par rapport à l'autre.

Toutefois, ici, les segments 132', 133' d'une même paire ne sont pas décalés longitudinalement l'un par rapport à l'autre mais sont situés en regard l'un de l'autre.

En variante, on pourrait prévoir que le rebord de tête 130' de l'accessoire de couplage 100' soit segmenté en seulement deux segments qui courent en parallèle le long de la partie centrale 110'.

Ici, les deux segments 132' et 133' d'une même paire du rebord de tête 130' présentent des hauteurs différentes, ils portent, sur leur bord d'extrémité libre, des bourrelets 132'A et 133'A orientés dans des directions opposées et destinés à s'accrocher dans deux rainures différentes prévues sur la face intérieure de chaque tronçon de socle 10.

Plus particulièrement, le bourrelet 132'A, prévu à l'extrémité du segment 132' du rebord de tête 130' de l'accessoire de couplage 100', est destiné à venir s'accrocher dans la rainure 13A formée au dos du retour 13 de l'aile latérale longitudinale 12 correspondante et le bourrelet 133'A, prévu à l'extrémité du segment 133' du rebord de tête 130', est destiné à venir s'accrocher dans une rainure 12C formée sur la face interne 12A de l'aile latérale longitudinale 12 et délimitée par une nervure longitudinale 12B.

Le segment 132' du rebord de tête 130' de l'accessoire de couplage 100' représenté sur la figure 8 présente un profil en zigzag alors que le segment 133' de ce même rebord de tête 130' présente un profil sensiblement droit.

Pour l'accessoire de couplage 100' représenté sur la figure 9, les segments 132', 133' du rebord de tête 130' présentent des profils droits sensiblement similaires.

La mise en place de chaque accessoire de couplage 100' représenté sur les figures 8 et 9 dans le tronçon de socle 10 est réalisée de la manière suivante.

L'installateur introduit les bourrelets 132'A situés aux extrémités des segments 132' du rebord de tête 130' dans la rainure 13A de l'aile latérale longitudinale 12 de chaque tronçon de socle 10 pour l'accrocher derrière le bec 13B du retour 13 puis fait pivoter, autour de ce point d'accrochage, l'accessoire de couplage 100' de façon à le plaquer contre la face interne 12A de l'aile latérale longitudinale 12.

Le verrouillage de l'accessoire de couplage 100' sur le tronçon de socle 10 est réalisé lorsque le bourrelet 133'A est encliqueté dans la rainure 12C prévue sur la face interne 12A de l'aile latérale longitudinale 12 correspondante du tronçon de socle 10.

Dans cette position verrouillée, le rebord de base 120' de l'accessoire de couplage 100' est plaqué contre le fond 11 du tronçon de socle 10.

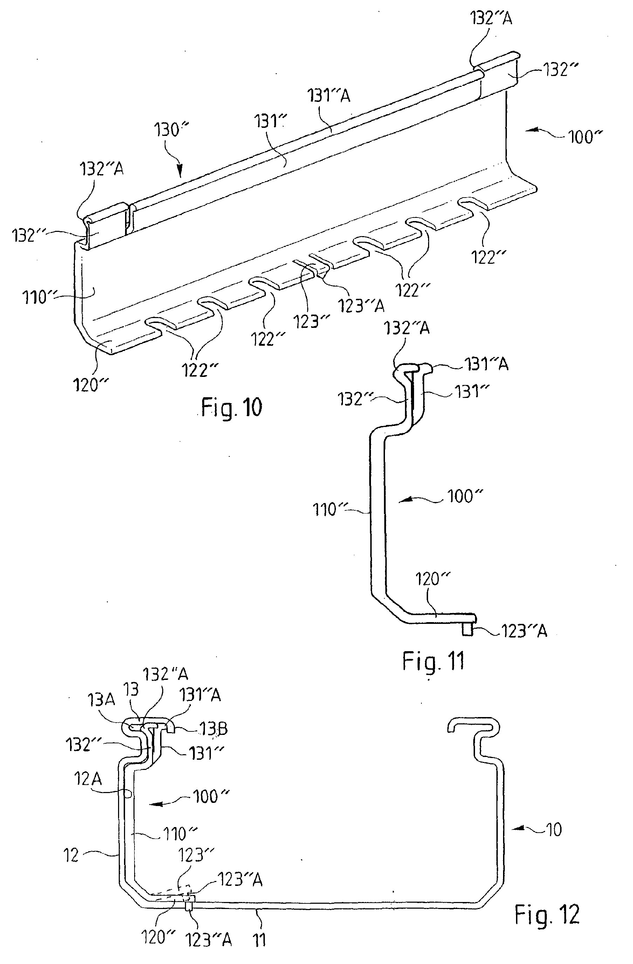

Sur les figures 10, 11, 12, 13A et 13B, on a représenté une autre variante de réalisation de l'accessoire de couplage 100" selon l'invention destiné à être mis en place dans un tronçon de socle 10 similaire à ceux décrits en référence aux figures 3A et 6A.

Selon cette variante, l'accessoire de couplage 100" comporte également une partie centrale 110" longitudinale bordée d'une part par un rebord de base 120" et d'autre part par un rebord de tête 130".

La partie centrale 110" de l'accessoire de couplage 100" est identique à celle des autres modes de réalisation.

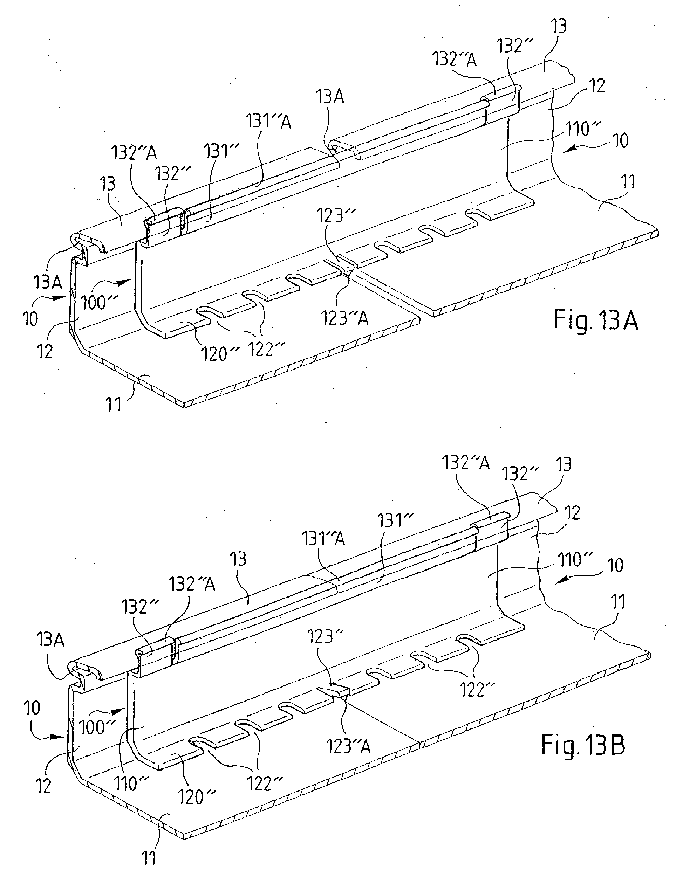

Le rebord de base 120" de l'accessoire de couplage 100" est similaire au rebord de base 120 de l'accessoire de couplage 100 représenté sur la figure 4, mis à part le fait qu'il comporte, à mi-longueur, une languette de centrage 123" flexible découpée dans ce dernier et portant en saillie, sur une face externe tournée vers la face intérieure desdits tronçons de socle 10, un plot de centrage 123"A dont la largeur correspond à celle de la languette de centrage 123" et autorisant le centrage de l'accessoire de couplage 100" sur les deux tronçons de socle 10 en se positionnant entre deux bords d'extrémité coupés de ces derniers lors de l'assemblage desdits tronçons de socle 10 (voir figure 13A).

Avantageusement, grâce à cette languette de centrage 123", l'installateur peut mettre en place facilement l'accessoire de couplage 100" sur lesdits tronçons de socle 10 à assembler et être assuré que l'accessoire de couplage 100" est réparti correctement entre les deux tronçons de socle 10.

En outre, ici aussi, les segments 131", 132" du rebord de tête 130" segmenté présentent des bourrelets 131"A, 132"A orientés dans des directions opposées.

Ces segments 131" et 132" présentent ici des hauteurs sensiblement identiques de sorte que les bourrelets 131 "A, 132"A qu'ils portent sont situés à des hauteurs identiques. Ces segments 131", 132" sont décalés latéralement et longitudinalement les uns par rapport aux autres.

Ici, les bourrelets 131 "A, 132"A sont destinés à venir s'accrocher dans la rainure 13A prévue au dos du retour 13 de l'aile latérale longitudinale 12 correspondante de chaque tronçon de socle 10.

La mise en place de l'accessoire de couplage 100" sur chaque tronçon de socle 10 est réalisée de la manière suivante.

L'installateur introduit le bourrelet 131"A du segment 131" du rebord de tête 130" dans la rainure 13A de chaque aile latérale longitudinale 12 correspondante de manière à ce qu'il vienne s'accrocher derrière le bec 13B prévu à l'extrémité du retour 13 de chaque aile latérale longitudinale 12, puis fait pivoter l'accessoire de couplage 100" autour de ce point d'accrochage pour venir le plaquer contre la face interne 12A desdites ailes latérales longitudinales 12.

En bout de course, les bourrelets 132"A des segments 132" du rebord de tête 130" de l'accessoire de couplage 100" viennent s'encliqueter dans chaque rainure 13A pour verrouiller l'ensemble sur chaque tronçon de socle.

Comme le montre la figure 13A, ainsi verrouillé, l'accessoire de couplage 100" est positionné sur les deux tronçons de socle 10 de telle manière que le plot de centrage 123"A porté par la languette de centrage 123" flexible s'étend dans un interstice situé entre les deux bords d'extrémité coupés des tronçons de socle 10.

Dans cette position, l'accessoire de couplage 100" est réparti équitablement entre les deux tronçons de socle 10.

Ainsi positionné et réparti sur lesdits tronçons de socle 10, l'accessoire de couplage 100" est maintenu rigidement et solidement sur lesdits tronçons de socle 10.

En cas de dilatation des tronçons de socle, la languette de centrage 123" flexible se soulève élastiquement et le plot de centrage 123"A vient prendre appui contre les fonds 11 des tronçons de socle 10 à la jointure entre ces derniers.

Bien entendu, l'accessoire de couplage 100" tout comme l'accessoire de couplage 100' est réalisé avantageusement d'une seule pièce en matière plastique ou en métal.

On peut noter que, dans les divers exemples représentés, les bourrelets d'encliquetage s'accrochent en fin de course sur un rebord de la rainure dans laquelle ils sont engagés, ce qui évite leur échappement, même lorsque l'ensemble des moyens d'encliquetage est situé sur un seul rebord longitudinal, ici le rebord de tête. Or un tel regroupement des moyens d'encliquetage sur un seul rebord longitudinal peut avoir pour avantage d'assurer le verrouillage en place de l'accessoire sans le solliciter dans son ensemble.

## Revendications

1. Accessoire de couplage (100 ; 100' ; 100") destiné à l'assemblage de deux tronçons de socle (10) de goulotte, comprenant une partie centrale (110 ; 110' ; 110") longitudinale destinée à s'adosser à la face interne (12A) de deux ailes latérales longitudinales (12) juxtaposées desdits tronçons de socle (10) mis bout à bout, un rebord de base (120 ; 120' ; 120") longitudinal, un rebord de tête (130 ; 130' ; 130") longitudinal et des moyens d'encliquetage aptes à s'encliqueter dans au moins un logement interne desdits tronçons de socle (10), **caractérisé en ce que** ledit rebord de tête (130 ; 130' ; 130") longitudinal est segmenté en au moins deux segments (131, 133 ; 132', 133' ; 131", 132") décalés latéralement l'un par rapport à l'autre dont au moins un porte, sur un bord d'extrémité libre, un bourrelet (131A, 133A ; 132'A, 133'A ; 131"A, 132"A) faisant partie desdits moyens d'encliquetage et apte à s'encliqueter dans une rainure (13A ; 12C ; 16A, 15A) formée sur la face intérieure desdits tronçons de socle (10) de goulotte.

2. Accessoire de couplage selon la revendication 1, **caractérisé en ce que** chaque segment (131, 133 ; 132', 133' ; 131", 132") porte, sur un bord d'extrémité libre, un bourrelet (131A, 133A ; 132'A, 133'A ; 131"A, 132"A) faisant partie desdits moyens d'encliquetage.

3. Accessoire de couplage selon l'une des revendications 1 ou 2, **caractérisé en ce que** lesdits segments (131, 132, 133, 134, 135 ; 131", 132") sont également décalés longitudinalement l'un par rapport à l'autre.

4. Accessoire de couplage selon l'une des revendications 1 à 3, **caractérisé en ce que** le rebord de tête (130 ; 130") longitudinal est segmenté en au moins trois segments (131, 132 ; 131", 132"), à savoir un segment central (131 ; 131") encadré par deux segments d'extrémité (132 ; 132") situés à chacune des extrémités dudit rebord de tête, lesdits segments étant deux à deux décalés latéralement l'un par rapport à l'autre.

5. Accessoire de couplage selon l'une des revendications 1 à 4, **caractérisé en ce que** chaque extrémité dudit rebord de tête (130 ; 130') comporte une paire de segments (132, 133 ; 132', 133') décalés latéralement l'un par rapport à l'autre.

6. Accessoire de couplage selon l'une des revendications 1 à 5, **caractérisé en ce que** le rebord de tête (130) comporte une pluralité de paires de segments (132, 133, 134, 135), les segments d'une paire étant décalés latéralement l'un par rapport à l'autre.

7. Accessoire de couplage selon l'une des revendications 1 à 6, **caractérisé en ce que** les bourrelets (131A, 132A ; 132'A, 133'A) des segments (131, 132 ; 132', 133) dudit rebord de tête (130 ; 130') sont deux à deux orientés dans des directions opposées.

8. Accessoire de couplage selon l'une des revendications 1 à 7, **caractérisé en ce que** les segments (131, 132, 133, 134, 135 ; 131", 132") présentent des hauteurs sensiblement identiques de sorte que les bourrelets (131A, 132A, 133A, 134A, 135A ; 131"A, 132"A) qu'ils portent sont situés au même niveau.

9. Accessoire de couplage selon l'une des revendications 1 à 7, **caractérisé en ce que** les segments (132', 133') du rebord de tête (130') présentent des hauteurs différentes de sorte que les bourrelets (132'A, 133'A) qu'ils portent sont situés à deux niveaux différents.

10. Accessoire de couplage selon l'une des revendications 1 à 9, **caractérisé en ce que** les segments (131, 132, 133, 134, 135 ; 131", 132") du rebord de tête (130 ; 130") présentent des profils sensiblement identiques.

11. Accessoire de couplage selon l'une des revendications 1 à 9, **caractérisé en ce que** les segments (132', 133') du rebord de tête (130') présentent deux profils différents.

12. Accessoire de couplage selon la revendication 11, **caractérisé en ce qu'**un premier profil de segment (133') est un profil droit et un second profil de segment (132') est un profil en zigzag.

13. Accessoire de couplage selon l'une des revendications 1 à 12, **caractérisé en ce que** le rebord de base (120 ; 120' ; 120") comporte une pluralité d'orifices (121, 122) destinés à être traversés par des organes de fixation aptes à s'ancrer dans lesdits tronçons de socle (10).

14. Accessoire de couplage selon la revendication 13, **caractérisé en ce que** lesdits orifices (121) présentent un contour fermé.

15. Accessoire de couplage selon la revendication 13, **caractérisé en ce que** lesdits orifices (122) présentent un contour ouvert.

16. Accessoire de couplage selon l'une des revendications 1 à 15, **caractérisé en ce qu'**il comporte, à mi-longueur, une languette de centrage (123") flexible découpée dans le rebord de base (120") et portant en saillie, sur une face externe tournée vers la face intérieure desdits tronçons de socle (10), un plot de centrage (123"A) dont la largeur correspond à celle de la languette de centrage (123") et autorisant le centrage de l'accessoire de couplage sur les deux tronçons de socle (10) en se positionnant entre les deux bords d'extrémité coupés de ces derniers lors de l'assemblage desdits tronçons de socle (10).

17. Accessoire de couplage selon l'une des revendications 1 à 16, **caractérisé en ce qu'**il est réalisé d'une seule pièce en matière plastique.

18. Ensemble de socle de goulotte comprenant :
- deux tronçons de socle (10) de goulotte aboutés, chaque tronçon de socle (10) comportant un fond (11) à partir duquel s'élèvent deux ailes latérales longitudinales (12) pourvues, à leur extrémité libre, d'un retour (13), et au moins une rainure (13A, 12C, 16A, 15A) étant formée sur la face intérieure desdits tronçons de socle (10), et
- deux accessoires de couplage (100 ; 100' ; 100") pour l'assemblage des deux tronçons de socle (10), à savoir un accessoire de couplage (100 ; 100' ; 100") selon l'une des revendications 1 à 17 par couple d'ailes latérales longitudinales aboutées, dont un rebord de tête longitudinal porte un bourrelet apte à s'encliqueter dans ladite rainure.

19. Ensemble selon la revendication 18, **caractérisé en ce que** ladite rainure (13A) est délimitée par la face interne des retours (13) d'ailes latérales longitudinales (12) des tronçons de socle (10) de goulotte.

20. Ensemble selon l'une des revendications 18 ou 19, **caractérisé en ce qu'**il est prévu une rainure (12C) formée sur la face interne (12A) de chaque aile latérale longitudinale (12) de chaque tronçon de socle (10), cette rainure (12C) étant délimitée notamment par une nervure longitudinale (12B) portée par la face interne de l'aile latérale longitudinale (12) correspondante.

21. Ensemble selon l'une des revendications 18 à 20, **caractérisé en ce qu'**il est prévu une rainure (16A) formée sur la face intérieure du fond (11) de chaque tronçon de socle (10), cette rainure (16A) étant délimitée par la face intérieure d'une nervure longitudinale (16) portée par ledit fond (11) correspondant.

22. Ensemble selon l'une des revendications 18 à 21, **caractérisé en ce qu'**il est prévu une rainure (15A) formée par un décrochement (15) réalisé à la jonction entre chaque aile latérale longitudinale (12) et le fond (11) de chaque tronçon de socle (10).

## Claims

1. A coupling accessory (100; 100'; 100") intended for the assembly of two duct base portions (10), comprising a longitudinal central part (110; 110'; 110") intended to bear against the internal face (12A) of two juxtaposed longitudinal side limbs (12) of said base portions (10) placed in end-to-end relationship, a longitudinal base flange (120; 120'; 120"), a longitudinal head flange (130; 130'; 130") and latching means adapted to latch into at least one internal recess of said base portions (10), **characterised in that** said longitudinal head flange (130; 130'; 130") is segmented into at least two segments (131, 133; 132', 133'; 131", 132") which are displaced laterally with respect to each other and of which one carries on a free end edge a ridge (131A, 133A; 132'A, 133'A; 131"A, 132"A) forming part of said latching means and capable of latching into a groove (13A; 12C; 16A, 15A) formed on the inward face of said duct base portions (10).

2. A coupling accessory according to claim 1 **characterised in that** on a free end edge each segment (131, 133; 132', 133'; 131", 132") carries a ridge (131A, 133A; 132'A, 133'A; 131"A, 132"A) forming part of said latching means.

3. A coupling accessory according to one of claims 1 and 2 **characterised in that** said segments (131, 132, 133, 134, 135; 131", 132") are also displaced longitudinally with respect to each other.

4. A coupling accessory according to one of claims 1 to 3 **characterised in that** the longitudinal head flange (130; 130") is segmented into at least three segments (131, 132; 131", 132"), namely a central segment (131; 131") flanked by two end segments (132; 132") disposed at each of the ends of said head flange, said segments being in paired relationship displaced laterally with respect to each other.

5. A coupling accessory according to one of claims 1 to 4 **characterised in that** each end of said head flange (130; 130') comprises a pair of segments (132, 133; 132', 133') which are laterally displaced with respect to each other.

6. A coupling accessory according to one of claims 1 to 5 **characterised in that** the head flange (130) comprises a plurality of pairs of segments (132, 133, 134, 135), the segments of a pair being displaced laterally with respect to each other.

7. A coupling accessory according to one of claims 1 to 6 **characterised in that** the ridges (131A, 132A; 132'A, 133'A) of the segments (131, 132; 132', 133) of said head flange (130; 130') are oriented in paired relationship in opposite directions.

8. A coupling accessory according to one of claims 1 to 7 **characterised in that** the segments (131, 132, 133, 134, 135; 131", 132") are of substantially equal heights so that the ridges (131A, 132A, 133A, 134A, 135A; 131"A, 132"A) that they carry are disposed at the same level.

9. A coupling accessory according to one of claims 1 to 7 **characterised in that** the segments (132', 133') of the head flange (130') are of different heights so that the ridges (132'A, 133'A) that they carry are disposed at two different levels.

10. A coupling accessory according to one of claims 1 to 9 **characterised in that** the segments (131, 132, 133, 134, 135; 131", 132") of the head flange (130; 130") have substantially identical profiles.

11. A coupling accessory according to one of claims 1 to 9 **characterised in that** the segments (132', 133') of the head flange (130') have two different profiles.

12. A coupling accessory according to claim 11 **characterised in that** a first segment profile (133') is straight profile and a second segment profile (132') is a zigzag profile.

13. A coupling accessory according to one of claims 1 to 12 **characterised in that** the base flange (120; 120'; 120") comprises a plurality of orifices (121, 122) intended to be traversed by fixing members adapted to be anchored in said base portions (10).

14. A coupling accessory according to claim 13 **characterised in that** said orifices (121) are of a closed contour.

15. A coupling accessory according to claim 13 **characterised in that** said orifices (122) are of an open contour.

16. A coupling accessory according to one of claims 1 to 15 **characterised in that** at mid-length it comprises a flexible centering tongue portion (123") which is cut out in a base flange (120") and carrying in projecting relationship on an outward face directed towards the inward face of said base portions (10) a centering projection (123"A), the width of which corresponds to that of the centering tongue portion (123") and permitting centering of the coupling accessory on the two base portions (10) by being positioned between the two cut end edges of said latter upon assembly of said base portions (10).

17. A coupling accessory according to one of claims 1 to 16 **characterised in that** it is made in one piece of plastic material.

18. A duct base assembly comprising:
- two duct base portions (10) in end abutting relationship, each base portion (10) comprising a bottom (11) from which there extend upwardly two longitudinal side limbs (12) provided at their free end with a return flange portion (13) and at least one groove (13A, 12C, 16A, 15A) being formed on the inward face of said base portions (10), and
- two coupling accessories (100; 100'; 100") for the assembly of two base portions (10), namely a coupling accessory (100; 100'; 100") according to one of claims 1 to 17 per pair of longitudinal side limbs in end abutting relationship, of which a longitudinal head flange carries a ridge adapted to latch into said groove.

19. An assembly according to claim 18 **characterised in that** said groove (13A) is delimited by the internal face of the return flange portions (13) of longitudinal side limbs (12) of the duct base portions (10).

20. An assembly according to one of claims 18 and 19 **characterised in that** there is provided a groove (12C) formed on the internal face (12A) of each longitudinal side limb (12) of each base portion (10), said groove (12C) being delimited in particular by a longitudinal rib (12B) carried by the internal face of the corresponding longitudinal side limb (12).

21. An assembly according to one of claims 18 to 20 **characterised in that** there is provided a groove (16A) formed on the inward face of the bottom (11) of each base portion (10), said groove (16A) being delimited by the inward face of a longitudinal rib (16) carried by said corresponding bottom (11).

22. An assembly according to one of claims 18 to 21 **characterised in that** there is provided a groove (15A) formed by a step (15) at the junction between each longitudinal side limb (12) and the bottom (11) of each base portion (10).

## Patentansprüche

1. Verbindungszubehör (100; 100'; 100"), das zum Zusammenfügen von zwei Sockelabschnitten (10) eines Kabelkanals bestimmt ist, mit einem mittleren Längsteil (110; 110'; 110"), das dazu bestimmt ist, an der Innenseite (12A) von zwei nebeneinanderliegenden Seitenlängsschenkeln (12) der aneinanderstoßenden Sockelabschnitte (10) anzuliegen, einem unteren Längsrand (120; 120'; 120"), einem oberen Längsrand (130; 130'; 130") und Rastmitteln, die in wenigstens eine innere Aufnahme der Sockelabschnitte (10) einzurasten vermögen,
**dadurch gekennzeichnet, dass** der obere Längsrand (130; 130'; 130") in wenigstens zwei Segmente (131, 133; 132', 133'; 131", 132") unterteilt ist, die bezüglich einander seitlich versetzt sind, von denen wenigstens eines auf einem freien äußeren Rand eine Wulst (131A, 133A; 132'A, 133'A; 131"A, 132"A) trägt, die zu den Rastmitteln gehört und in eine Nut (13A; 12C; 16A, 15A) einzurasten vermag, die auf der Innenseite der Sockelabschnitte (10) eines Kabelkanals ausgebildet ist.

2. Verbindungszubehör nach Anspruch 1,
**dadurch gekennzeichnet, dass** jedes Segment (131, 133; 132', 133'; 131", 132") auf einem freien äußeren Rand eine Wulst (131A, 133A; 132'A, 133'A; 131"A, 132"A) trägt, die zu den Rastmitteln gehört.

3. Verbindungszubehör nach einem der Ansprüche 1 oder 2,
**dadurch gekennzeichnet, dass** die Segmente (131, 132, 133, 134, 135; 131", 132") bezüglich einander auch in Längsrichtung versetzt sind.

4. Verbindungszubehör nach einem der Ansprüche 1 bis 3,
**dadurch gekennzeichnet, dass** der obere Längsrand (130; 130") in wenigstens drei Segmente (131, 132; 131", 132") unterteilt ist, und zwar ein mittleres Segment (131; 131"), das von zwei äußeren Segmenten (132; 132") eingerahmt wird, die jeweils an den Enden des oberen Rands angeordnet sind, wobei die Segmente bezüglich einander paarweise seitlich versetzt sind.

5. Verbindungszubehör nach einem der Ansprüche 1 bis 4,
**dadurch gekennzeichnet, dass** jedes Ende des oberen Rands (130; 130') ein Paar Segmente (132, 133; 132', 133') aufweist, die bezüglich einander seitlich versetzt sind.

6. Verbindungszubehör nach einem der Ansprüche 1 bis 5,
**dadurch gekennzeichnet, dass** der obere Rand (130) eine Vielzahl von Segmentpaaren (132, 133, 134, 135) aufweist, wobei die Segmente eines Paares bezüglich einander seitlich versetzt sind.

7. Verbindungszubehör nach einem der Ansprüche 1 bis 6,
**dadurch gekennzeichnet, dass** die Wülste (131A, 132A; 132'A, 133'A) der Segmente (131, 132; 132', 133) des oberen Rands (130; 130') paarweise in entgegengesetzte Richtungen weisen.

8. Verbindungszubehör nach einem der Ansprüche 1 bis 7,
**dadurch gekennzeichnet, dass** die Segmente (131, 132, 133, 134, 135; 131", 132") im Wesentlichen gleich hoch sind, so dass die Wülste (131A, 132A, 133A, 134A, 135A; 131"A, 132"A), mit denen sie versehen sind, in gleicher Höhe angeordnet sind.

9. Verbindungszubehör nach einem der Ansprüche 1 bis 7,
**dadurch gekennzeichnet, dass** die Segmente (132', 133') des oberen Rands (130') verschieden hoch sind, so dass die Wülste (132'A, 133'A), mit denen sie versehen sind, in zwei verschiedenen Höhe angeordnet sind.

10. Verbindungszubehör nach einem der Ansprüche 1 bis 9,
**dadurch gekennzeichnet, dass** die Segmente (131, 132, 133, 134, 135; 131", 132") des oberen Rands (130; 130") im Wesentlichen gleiche Profile aufweisen.

11. Verbindungszubehör nach einem der Ansprüche 1 bis 9,
**dadurch gekennzeichnet, dass** die Segmente (132', 133') des oberen Rands (130') zwei verschiedene Profile aufweisen.

12. Verbindungszubehör nach Anspruch 11,
**dadurch gekennzeichnet, dass** ein erstes Segmentprofil (133') ein gerades Profil und ein zweites Segmentprofil (132') ein zickzackförmiges Profil ist.

13. Verbindungszubehör nach einem der Ansprüche 1 bis 12,
**dadurch gekennzeichnet, dass** der untere Rand (120; 120'; 120") eine Vielzahl von Öffnungen (121, 122) aufweist, die dazu bestimmt sind, von Befestigungsorganen durchquert zu werden, die sich in den Sockelabschnitten (10) zu verankern vermögen.

14. Verbindungszubehör nach Anspruch 13,
**dadurch gekennzeichnet, dass** die Öffnungen (121) einen geschlossenen Umfang aufweisen.

15. Verbindungszubehör nach Anspruch 13,
**dadurch gekennzeichnet, dass** die Öffnungen (122) einen offenen Umfang aufweisen.

16. Verbindungszubehör nach einem der Ansprüche 1 bis 15,
**dadurch gekennzeichnet, dass** es auf halber Länge eine flexible Zentrierzunge (123") umfasst, die in dem unteren Rand (120") eingeschnitten ist und auf einer zur Innenseite der Sockelabschnitte (10) gewandten Außenseite vorstehend mit einem Zentrierstück (123"A) versehen ist, dessen Breite der der Zentrierzunge (123") entspricht und das Zentrieren des Verbindungszubehörs an den beiden Sockelabschnitten (10) gestattet, indem es sich beim Zusammenfügen der Sockelabschnitte (10) zwischen deren beiden getrennten Stirnkanten anordnet.

17. Verbindungszubehör nach einem der Ansprüche 1 bis 16,
**dadurch gekennzeichnet, dass** es aus einem Stück aus Kunststoff gefertigt ist.

18. Sockeleinheit eines Kabelkanals mit:
- zwei aneinanderstoßenden Sockelabschnitten (10) eines Kabelkanals, wobei jeder Sockelabschnitt (10) einen Boden (11) umfasst, von dem sich zwei Seitenlängsschenkel (12) erheben, die an ihren freien Enden mit einem Rücksprung (13) und wenigstens einer Nut (13A, 12C, 16A, 15A) versehen sind, die auf der Innenseite der Sockelabschnitte (10) ausgebildet ist, und
- zwei Verbindungszubehören (100; 100'; 100") zum Zusammenfügen von zwei Sockelabschnitten (10), und zwar einem Zubehör (100; 100'; 100") nach einem der Ansprüche 1 bis 17 zum Verbinden von aneinanderstoßenden Seitenlängsschenkeln, von denen ein oberer Längsrand mit einer Wulst versehen ist, die in die Nut einzurasten vermag.

19. Einheit nach Anspruch 18,
**dadurch gekennzeichnet, dass** die Nut (13A) durch die Innenseite der Rücksprünge (13) der Seitenlängsschenkel (12) der Sockelabschnitte (10) des Kabelkanals begrenzt ist.

20. Einheit nach einem der Ansprüche 18 oder 19,
**dadurch gekennzeichnet, dass** eine Nut (12C) vorgesehen ist, die auf der Innenseite (12A) jedes Seitenlängsschenkels (12) eines jeden Sockelabschnitts (10) ausgebildet ist, wobei die Nut (12C) insbesondere durch eine Längsrippe (12B) begrenzt ist, mit der die Innenseite des entsprechenden Seitenlängsschenkels (12) versehen ist.

21. Einheit nach einem der Ansprüche 18 bis 20,
**dadurch gekennzeichnet, dass** eine Nut (16A) vorgesehen ist, die auf der Innenseite des Bodens (11) eines jeden Sockelabschnitts (10) ausgebildet ist, wobei die Nut (16A) durch die Innenseite einer Längsrippe (16) begrenzt ist, mit welcher der entsprechende Boden (11) versehen ist.

22. Einheit nach einem der Ansprüche 18 bis 21,
**dadurch gekennzeichnet, dass** eine Nut (15A) vorgehen ist, die durch eine Stufe (15) gebildet ist, die am Übergang zwischen jedem Seitenlängsschenkel (12) und dem Boden (11) eines jeden Sockelabschnitts (10) ausgeführt ist.
